Europäisches Patentamt

European Patent Office

Office européen des brevets

(19)

(11) Publication number: **0 241 132 B1**

# (12) EUROPEAN PATENT SPECIFICATION

(45) Date of publication of patent specification: **03.07.91**

(51) Int. Cl.⁵: **C09D 133/00, C09J 133/00, C08L 57/00, C08L 51/00**

(21) Application number: **87301877.4**

(22) Date of filing: **04.03.87**

The file contains technical information submitted after the application was filed and not included in this specification

(54) **Compositions suitable in or as film, coating, mastic, adhesive, caulk compositions, and a method of making them.**

(30) Priority: **05.03.86 US 836379**

(43) Date of publication of application:
**14.10.87 Bulletin 87/42**

(45) Publication of the grant of the patent:
**03.07.91 Bulletin 91/27**

(84) Designated Contracting States:
**AT BE CH DE ES FR GB IT LI NL SE**

(56) References cited:
**EP-A- 0 089 741**
**DE-A- 1 955 377**
**US-A- 4 033 920**
**US-A- 4 461 870**
**US-A- 4 529 765**

**ORGAN. COATINGS, vol. 7, 1984, pages 157-172; D.R. BAUER: "Mechanism for flow control by dispersed polymeric particles in high solids paints"**

(73) Proprietor: **ROHM AND HAAS COMPANY**
**Independence Mall West**
**Philadelphia Pennsylvania 19105(US)**

(72) Inventor: **Chiou, Shang-Jaw**
**736 Tranquility Lane**
**Lansdale Pennsylvania 19446(US)**
Inventor: **Winey, Donald Alfred**
**358 Rettop Street**
**Warminster Pennsylvania 18964(US)**

(74) Representative: **Angell, David Whilton et al**
**ROHM AND HAAS (UK) LTD. European Operations Patent Department Lennig House 2 Mason's Avenue**
**Croydon CR9 3NB(GB)**

## Description

This invention is concerned with compositions comprising film-forming polymer which are suitable for use in or as films, coatings, mastics, adhesives and caulks, and a method of making such compositions.

Compositions comprising film-forming polymers are well known for use in or as films, coatings, mastics, adhesives and caulks. It has been suggested that such compositions may be modified with insoluble reinforcing polymeric particles comprising different polymer compositions from the film-forming polymer itself. For example, US-A-4461870 discloses a high solid coating composition comprising film-forming polymer having functional groups capable of reacting with a crosslinking agent, an organic diluent for said polymer and crosslinking agent and insoluble polymer microparticles ("microgels") composed of a crosslinked copolymer of alpha, beta ethylenically unsaturated monomers, said microparticles carrying a resinous portion, different from said film-forming polymer, having an amphoionic group of the formula -N-R-Y where R is alkylene or phenylene and Y is -COOH or -SO$_3$H. EP-A-0089741 discloses coating compositions containing a soluble film forming synthetic resin, an organic solvent and insoluble, emulsion polymerised polymer microparticles

These known compositions, which comprise polymeric reinforcing particles, suffer from the disadvantage that the reinforcing particles require separate preparation. This has the further disadvantages that either harmful emulsifiers or stabilizers are required or, in the case of US-A-4461870 where the objective is to provide microparticles of polymer which could be prepared without using any harmful emulsifier or stabilizing agent and which could be directly added to a coating composition as they are, a specialized amphoionic stabilizer, which would increase the water-sensitivity, is required.

US-A-4529765 discloses a coating composition comprising a solvent and a binder containing an ethylenically-unsaturated acrylic polymer and an amino acrylic polymer.

An objective of the present invention is to provide a composition comprising film-forming polymer and reinforcing particles which does not suffer from some or all of the above disadvantages of the known compositions, and in addition may have improved stability, compatibility, ease of blending, acceptance of wide range of solvent types, and usable without isolation from non-compatible reaction mixtures.

In accordance with one aspect, the present invention provides a composition comprising film-forming polymer dissolved in organic solvent, said film-forming polymer containing reactive functionality which is either ethylenic unsaturation or is other than ethylenic unsaturation, and insoluble reinforcing particles dispersed in said solution which are the reaction product of a system comprising (a) polyethylenically unsaturated monomer, (b) a portion of said film-forming polymer and, when said reactive functionality is other than ethylenic unsaturation, (c) a linking monomer which contains both ethylenic unsaturation and a group reactive with said reactive functionality. The reinforcing particles are preferably formed in the presence of said film-forming polymer.

In another aspect of the present invention we provide a method of making a composition comprising a solution of film-forming polymer dissolved in organic solvent and substantially insoluble reinforcing particles dispersed in said solution, said film-forming polymer containing reactive functionality which is either ethylenic unsaturation or is other than ethylenic unsaturation said method comprising (1) preparing a solution of film-forming polymer in organic solvent, (2) reacting polyethylenically unsaturated monomer with a portion of said film forming polymer and optionally, when said reactive functionality is other than ethylenic unsaturation, (c) a linking monomer which contains both ethylenic unsaturation and a group reactive with said reactive functionality, so as to form, in-situ, a stable composition comprising said film-forming polymer and insoluble reinforcing particles dispersed in said solution. The process for preparing these compositions is quite unique.

The film-forming polymer constituent of the invention is, of course, soluble in organic solvent and, as mentioned above, contains reactive functionality which is either ethylenic unsaturation, preferably pendant ethylenic functionality, or is "other than ethylenic unsaturation". Unsaturation which is ethylenic occurs in such film-forming polymers as, for example, poly(1,3-butadiene), alkyds, and unsaturated polyesters.

The film-forming polymers are prepared in solution, preferably to a number average molecular weight of about 2,500 to 200,000, and more preferably about 20,000 to 100,000.

The choice of solvent is not critical. Any solvent suitable to the desired end use can be used. Preferred organic solvents are xylene, toluene, VM&P naphtha, mixtures of aliphatic/aromatic hydrocarbons, hexanes, heptanes, octanes, ether alcohols, ethyl acetate, butyl acetate, methylethyl ketone, methyl isobutyl ketone, and mixtures thereof.

The solvent to polymer ratio can be any which is suitable for the end use. Preferably, the solvent to monomer mix or polymer ratio is about 3:1 to 1:7

As mentioned above, the reactive functionality can be "other than ethylenic unsaturation," for example

2

hydroxy, carboxy, anhydro, oxyrane, amino, and isocyanate groups. Such functional groups can be introduced by incorporation of a monomer which has both ethylenic and other than ethylenic functionality, such as, for example, acrylic acids, hydroxy-containing acrylates, isocyanate acrylates, unsaturated anhydrides, unsaturated epoxides, amines, or combinations thereof.

The balance, preferably up to about 90 percent by weight, of the monomer system which polymerizes and forms the film-forming polymer containing other than ethylenic functionality is monounsaturated and is preferably comprised of methacrylates, acrylates, acrylonitrile, n-vinyl pyrrolidone, styrene, amine-containing monomer, vinyl acetate, vinyl chloride, and/or vinylidene chloride.

Specific combinations of monomers to form such film-forming polymers, are exemplified by the following examples: (i) butylacrylate, acrylonitrile, and acrylic acid; (ii) butylacrylate, acrylonitrile, and hydroxyethyl methacrylate; (iii) butadiene; (iv) an alkyd; (v) butylacrylate, methyl methacrylate, acrylonitrile, and acrylic acid; (vi) butylacrylate, methyl methacrylate, acrylonitrile, and methacrylic acid; (vii) butyl acrylate and acrylic acid; (viii) butyl acrylate and methacrylic acid; (ix) unsaturated polyester; or (x) butylacrylate, acrylonitrile and maleic anhydride.

In either case, i.e., whether the reactive functionality on the film-forming polymer is ethylenic or other than ethylenic, the invention contemplates reacting part of the film-forming polymer with polyethylenically unsaturated monomer(s) to form, in situ, substantially insoluble reinforcing particles which become dispersed in the solution of the film-forming polymer. Examples of such polyethylenically unsaturated monomers are dimethacrylates, diacrylates, trimethacrylates, triacrylates, divinyl aromatics, trivinyl aromatics, diacrylamides, triacrylamides, and mixtures thereof. Specific examples of such monomers are 1,3-butyleneglycol dimethacrylate, ethyleneglycol dimethacrylate, diethyleneglycol dimethacrylate, trimethylolpropane trimethacrylate, trimethylolpropane triacrylate, the adduct of hydroxyethyl methacrylate and metatetramethyl xylene diisocyanate, divinyl benzene, methylene bisacrylamide, and mixtures thereof.

In the case where the functionality is other than ethylenic, a "linking monomer" which contains both ethylenic unsaturation and a group(s) reactive with the other-than-ethylenic functional groups is reacted with the film-forming polymer, either by simple mixing, e.g., in the case of acid-amine reactions, or by adjusting the reaction conditions to cause said reaction, e.g., in the case of isocyanate-hydroxyl or the acid-hydroxyl reaction. Some preferred linking monomers are allyglycidyl ether, N-methyl-N-(2-hydroxyethyl) linseed oil amide, dimethylaminoethyl methacrylate, and isocyanatoethyl methacrylate, acrylic acid, methacrylic acid, glycidyl acrylate, glycidyl methacrylate, linseed oil fatty acid, linseed oil fatty amine, drying oil amines, linseed oil fatty alcohol, drying oil alcohols, glycidyl drying oil acid esters, N-methyl-N-hydroxyethyl drying oil amides, vinyl benzyl chloride, (meth)acrylol chloride and glycidyl linseed oil fatty ester.

The particles preferably comprise about 1 to 70 percent by weight of the entire composition, based on weight of film-forming polymer and particles, and are usually stable gel particles preferably having an average diameter of about 30 to 1000 nanometers by transmission electron microscopy on stained films.

The compositions of the present invention when dried and cured provide films or coatings having low surface tack, short drying time, high tensile strength, and high film hardness. When used as a roof mastic, adhesive, or caulk, the composition imparts improved properties such as increased tensile strength and reduced tack.

The composition also has an advantage with alkyd resins which are used in some cases as the film-forming polymer. It improves their drying time and reverse impact resistance.

The usual catalysts and minor additives can also be used in this invention, as can be the additives which are frequently post-added to film-forming polymers.

A further advantage of the present invention is the provision of a method of making the composition which avoids the separate preparation of polymeric reinforcing particles and which also avoids the amphoionic stabilizer.

Other utilities and variation on the preparation of this invention are also contemplated.

The invention also includes the reinforcing particles themselves, a method of making the reinforcing particles and use of the reinforcing particles.

Several non-limiting, non-restrictive examples of the invention and comparative embodiments are described below.

EXAMPLE I -  Preparation of film-forming polymer, dissolved in organic solvent, containing reactive functionality which is other than ethylenic unsaturation followed by reaction with linking monomer.

A. Preparation of Carboxyl Containing Solution Polymer

A 5 liter four-necked flask equipped with a thermometer, condenser, mechanical stirrer and nitrogen inlet pipe was charged with 259 g of butylacrylate, 7 g of acrylonitrile, 14 g of acrylic acid ("AA"), 0.06 g t-butylperbenzoate and 500 g of xylene. The solution was heated gently to reflux under a nitrogen sweep until polymerization took place. The solution was then maintained at reflux for fifteen minutes, at which point a mixture of monomers (2331 g butylacrylate, 63 g acrylonitrile and 126 g acrylic acid) and initiator (0.5 g t-butylperbenzoate in 170 g xylene) were separately added in a dropwise manner over a period of three hours while the solution was maintained at reflux. The reaction temperature was steadily increased to 150°C during the feed. On completion of the feed, the solution was held at reflux for fifteen minutes. After the hold period, a chaser solution (0.56 g t-butylperbenzoate in 180 g xylene) was added dropwise over a period of thirty minutes. The solution was then cooled to 130°C after the first chase. Residual monomers were finally chased with 2.8 g. t-butylperbenzoate in 10 g xylene, followed by 10 g butylacrylate. The solution was then held at 130°C for one and a half hours. The solution was cooled, and the resulting solution polymer had 78% total solids and weight average molecular weight $1.09 \times 10^5$, number average molecular weight $1.03 \times 10^4$. The resultant film-forming polymer contains carboxyl functionality.

B. Reacting of MHELA with Carboxyl-Containing Solution Polymer

A 5 liter four-necked flask equipped with a thermometer, Dean-Stark trap topped with a condenser and nitrogen inlet pipe was charged with 3,000 g of the polymer from Example IA (78% solids), 198 g of N-methyl-N-hydroxyethyl linseed oil amide solution ("MHELA", 59% active in toluene), and 200 g of xylene. The MHELA acts as a linking monomer, reacting with the carboxyl groups of the film-forming polymer and providing pendant unsaturation. The solution was heated at 135°C and the water of the reaction was azeotropically removed with the aid of a nitrogen sparge or house vacuum. After continuous heating for two hours, the reaction was complete. The final solution had 80.3% solids and the Brookfield viscosity at 25°C was 68,000 cps (68 $Nm^{-2}S$).

EXAMPLE II - Preparation of reinforcing particles by reacting polyethylenically unsaturated monomer with a portion of composition comprising film-forming polymer dissolved in organic solvent

To a 5 liter flask fitted with stirrer, nitrogen inlet pipe, thermometer and condenser were added 2,000 g of the film-forming polymer from Example IB (total solids 71.4%), 159 g of 1,3-butylene glycol dimethacrylate ("1,3-BGDMA"), and 400 g of xylene. The solution was heated at 68°C under a nitrogen sweep. At that temperature, 1.59 g of VAZO-52 [2,2'-azobis(2,4-dimethyl valeronitrile)] in 25 g xylene was added. A 3°C exotherm and a hazy solution were obtained within 30 minutes. After one hour at 68°C, the chaser solution (1.59 g VAZO-52/25 g xylene) was added. The solution was then held at 68°C for two hours to complete the process. GLC analysis indicated that 1,3-BGDMA conversion was 95%. The final hazy composition of the invention had total solids of 61.4%, Brookfield viscosity at 25°C of 32,500 cps (32.5 $Nm^{-2}S$) and insoluble reinforcing particles having a size of 700 nm with a polydispersity of 7 (measured in acetone on a Coulter Nanosizer), a value about three times larger than observed in the dry film by transmission electron microscopy on stained films.

EXAMPLE III - Preparation and characterization of additional examples of the invention.

Example II was repeated, except varying the % of 1,3-BGDMA, and comparing to Example IA and an example substituting monounsaturated methyl methacrylate (MMA) for the polyethylenically unsaturated 1,3-BGDMA.

The soluble fraction, swell ratio and particle sizes of the compositions are shown in Table 1.

Table 1: Film-Forming Polymer: 92.5 BA/2.5 AN/5 AA//5 MHELA

| Un-Saturated Monomer | Total Solids of polymerized composition | Viscosity cps (Nm$^{-2}$S) | Soluble Fraction | Swell Ratio | Particle Present and % Insoluble |
|---|---|---|---|---|---|
| None* | 58.8 | 6,600 (6.6) | 99.5 | -- | no/0 |
| 10 MMA* | 57.3 | 7,900 (7.9) | 99.0 | -- | no/0 |
| 3 1,3-BGDMA | 61.9 | 13,800 (13.8) | 96.0 | 2.9 | yes/4 |
| 5 1,3-BGDMA | 59.6 | 11,200 (11.2) | 93.0 | 11.7 | yes/7 |
| 10 1,3-BGDMA | 61.3 | 35,500 (35.5) | 82.0 | 6.2 | yes/18 |
| 20 1,3-BGDMA | 50.7 | 55,000 (55) | 73.0 | 6.5 | yes/27 |

* = Comparative

EXAMLPLE IV    Preparation of composition comprising film forming polymer, dissolved in organic solvent, containing reactive functionality other than ethylenic unsaturation, and reinforcing particles which are the reaction product of a monomer system comprising polyethylenically unsaturated monomer, a portion of said film-forming polymer, and a linking monomer which contains both ethylenic unsaturation and a group reactive with said reactive functionality.

A 3 liter four-necked flask equipped with a thermometer, condenser, mechanical stirrer and nitrogen inlet tube was charged with 725 g of a 44.4% solids in xylene solution of the film-forming polymer of Example 1A, containing acid reactive functionality, 30.4 g of 1,3-BGDMA polyethylenically unsaturated monomer, and 5.4 g of N,N-dimethylaminoethyl-methacrylate ("DMAEMA") linking monomer which contains both ethylenic unsaturation and a group reactive with the reactive functionality, i.e., the acid functionality, of the film-forming polymer. The solution was heated at 95° C under a nitrogen sweep. At that temperature, 0.36 g of VAZO-52 in 2 g xylene was added. A slightly hazy solution was obtained within one minute. The solution was held at 95° C for thirty minutes, and then cooled to 80° C. The chaser solution (0.36 g VAZO-52/2 g xylene) was added, and the solution was held at 80° C for one hour. The final solution had total solids of 48.9%, Brookfield viscosity at 25° C of 30,000 cps (30 Nm$^{-2}$S), a particle size of 224 nm, and a polydispersity of 5 (measured in acetone, Nanosizer).

EXAMPLE V -    Preparation of Compositions of Invention using Allyl Glycidyl Ether to provide ethylenic unsaturation in film-forming polymer.

To a 1 liter four-necked flask equipped with mechanical stirrer, condenser, thermometer and nitrogen inlet tube was charged 100 g of the AA-containing film-forming polymer prepared in Example IA (T.S.: 77.6%), 0.61 g of allyl glycidyl ether linking monomer which reacts to add ethylenic unsaturation, and 0.12 g of N,N-dimethylaminoethanol ("DMAE") as catalyst. The solution was heated at 120° C until the theoretical carboxylic acid was reacted (2 hours). The solution was then cooled until the solution temperature dropped to 95° C. To the film-forming polymer, now containing pendent ethylenic unsaturation, was added 8.6 g of 1,3-BGDMA polyethylenically unsaturated monomer followed by 0.086 g VAZO-52 in 2 g xylene. The mixture was held at 95° C for 30 minutes and then cooled at 80° C. A chaser solution (0.086 g VAZO 52/2 g xylene) was then added. To complete the reaction, the solution was then held at 80° C for one hour. The final product was diluted with 66 g of xylene to a total solids of 48.1%; Brookfield viscosity at 25° C of 4,200 cps (4.2 Nm$^{-2}$S) and particle size (polydispersity) of 367 nm (3).

EXAMPLE VI    Use of isocyanatoethyl methacrylate as linking monomer.

To a 500 ml. four-necked flask equipped with mechanical stirrer, condenser, thermometer and nitrogen inlet tube was charged 135 g of a solution polymer of the composition 95 BA/2.5 AN/2.5 HEMA prepared by the method of Example IA (total solids: 75.2%), 0.2 g of isocyanatoethyl methacrylate, 11.3 g of 1,3-BGDMA and 70 g of xylene. The solution was heated at 80° C. To this solution was then added two drops of T-12 (dibutyltin dilaurate) and the solution was maintained at 80° C for one hour. The solution was cooled to 68° C and at that temperature, 0.1 g of VAZO-52 in 2 g xylene was added. After one hour at 68° C, the chaser solution (0.1 g VAZO-52/2 g xylene) was added. The solution was then held at 68° C for two hours to complete the process. The final solution polymer had total solids of 53.6%, Brookfield viscosity at 25° C of 445 cps (0.445 Nm$^{-2}$S) and a particle size (polydispersity) of 247 nm (3).

EXAMPLE VII    Use of polybutadiene as film-forming polymer containing ethylenic unsaturation and 1,3-BGDMA as polyunsaturated monomer.

To a 500 ml. four-necked flask equipped with mechanical stirrer, condenser, thermometer and nitrogen inlet tube was charged 100 g of polybutadiene (Arco Poly BD R45HT; 100%), 4.2 g 1,3-BGDMA and 50 g xylene. The solution was heated at 90° C under a nitrogen sweep. At that temperature, 0.04 g of VAZO-52 in 2 g xylene was added. After 30 minutes the solution was cooled to 70° C and held at that temperature for one and a half hours. The resulting solution polymer had 68.6% total solids and the Brookfield viscosity at 25° C was 280 cps (0.28 Nm$^{-2}$S); particle size (polydispersity) of 240 nm (2) (measured in hexane).

EXAMPLE VIII     Comparison of Polyunsaturated monomer modified solution polymer with usual second stage and polymer blend systems.

Films were prepared by the following procedure with and without particles from polyunsaturated monomer, and using MMA as a comparative second stage. To the solution polymer of Example IB or II (10.7 g of solids), 0.32 g of pentaerythritol tetra (3-mercaptopropionate) (PETMP) is added 2.15 g of a 2% vanadyl acetylacetone catalyst in xylene solution (hereafter referred to as VOMA cure). Films are prepared by casting 10-15 g (about 6 g dry weight) of this mixture in 10 cm polymethylpentene petri dishes and allowing the solution to dry/cure on a level surface. After curing 4-7 days at ambient conditions the film is lightly talced and strips cut for determination of mechanical properties on the Instron.

As indicated in Table 2, the film's toughness increased proportionally with the 1,3-BGDMA particles. The superiority of the 1,3-BGDMA particles modified sample vs. MMA as the second stage and polymer blends also can be seen in Table 2.

Table 2:  First Stage Polymer:  92.5 BA/2.5 AN/5 AA//5 MHELA

| From Example | % Unsaturated Monomer | 75°F (23.9°C) Properties | | 0°F (-17.8°C) Properties | |
|---|---|---|---|---|---|
| | | Tensile Strength | Elongation (%) | Tensile Strength | Elongation (%) |
| | | psi   (MNm$^{-2}$) | | psi   (MNm$^{-2}$) | |
| IB | * 0 | 33   (0.23) | 190 | 412   (2.84) | 560 |
| II | 10 1,3-BGDMA | 127   (0.875) | 330 | 951   (6.55) | 440 |
| II | 20 1,3-BGDMA | 400   (2.76) | 340 | 1360   (9.37) | 390 |
| II | *10 MMA | 55   (0.38) | 180 | 441   (3.04) | 490 |

* = Comparative

EXAMPLE IX

Comparison of Polyunsaturated Monomer Modified Polymer with Hard First Stage Polymer.

As indicated in Table 3, the tensile strength of the films increased as the polymer Tg increases.

8

However, the low temperature flexibility of the films begins to fall at the point that the mechanical properties begin to build. Therefore, a good balance of properties is not obtained by simply increasing the Tg of the polymer. Films were cured by the procedure of Ex. VIII.

### Table 3

| Prepared by Process of Example | First Stage BA/MMA/AN/AA/MHELA | Polyethyleni-cally Unsaturated Monomer (%) 1,3-BGDMA | Calc.[2] Tg (°C) |
|---|---|---|---|
| IB | 92.5/--/2.5/5.0//5.0 | 0* | -42 |
| II | 92.5/--/2.5/5.0//5.0 | 10 | -42 |
| III | 92.5/--/2.5/5.0//5.0 | 20 | -42 |
| IB | 82.5/10/2.5/5.0//5.0 | 0* | -37 |
| IB | 72.5/20/2.5/5.0//5.0 | 0* | -25 |
| IB | 52.5/40/2.5/5.0//5.0 | 0* | 0 |
| IB | 37.5/55/2.5/5.0//5.0 | 0* | +24 |

## Continuation of Table 3

| Prepared by Process of Example | Flexibility (-15°F (-26.1°C)) | Tensile Strength[1] psi | (MNm$^{-2}$) | Elongation[1] (%) |
|---|---|---|---|---|
| IB | Pass at 180° | 30 | (0.21) | 220 |
| II | Pass at 180° | 98 | (0.675) | 370 |
| III | Pass at 180° | 391 | (2.69) | 310 |
| IB | Pass at 180° | 40 | (0.27) | 240 |
| IB | Fail at 2" | 56 | (0.39) | 360 |
| IB | Fail at 4" | 248 | (1.71) | 650 |
| IB | Fail at 4" | 251 | (1.73) | 650 |

* = Comparative

---

[1] Films were cured by VOMA Chemistry, see Example VIII.
[2] Of the first stage polymer before MHELA modification.

EXAMPLE X    Effect of various cures.

As Indicated in Table 4, the tensile strength increases as 1,3-BGDMA increases with four types of curing. The elongation increases with 1,3-BGDMA in VOMA and oxidative curing, while the elongation decreases slightly with 1,3-BGDMA in ionic and ionic/oxidative cures.

Table 4: First Stage: Polymer of Example IB

| Cure Mechanism | Unmodified[1] | | 10 1,3-BGDMA[2] | | 20 1,3-BGDMA[2] | |
|---|---|---|---|---|---|---|
| | Tensile Strength psi ($MNm^{-2}$) | Elong. (%) | Tensile Strength psi ($MNm^{-2}$) | Elong. (%) | Tensile Strength psi ($MNm^{-2}$) | Elong. (%) |
| VOMA cure of Ex. | | | | | | |
| VIII | 32 (0.22) | 200 | 146 (1.01) | 370 | 362 (2.49) | 430 |
| Ionic (Zn) | 77 (0.53) | 1220 | 221 (1.52) | 830 | 234 (1.61) | 800 |
| Oxidative (Co) | 23 (0.16) | 145 | 72 (0.50) | 410 | 269 (1.85) | 470 |
| Ionic & Oxidative | 324 (2.23) | 800 | 499 (3.44) | 710 | 800 (5.51) | 450 |

1 = Comparative

2 = Polymers of Example II and III

EXAMPLE XI    Modification of alkyl film-forming polymer with 1,3-BGDMA, polyethylenically unsaturated monomer.

To a 500 ml. flask fitted with stirrer, nitrogen inlet pipe, thermometer and condenser were added 189.2

11

of Cargil 5070 alkyd polymer (Cargil Inc., T.S.: 70%) and 14.9 g of 1,3-BGDMA. The solution was heated to 95°C under a nitrogen sweep. At that temperature, 0.15 g of VAZO-52 in 2 g xylene was added. The solution was held at 95°C for thirty minutes, and then cooled to 80°C. The chaser solution was added (0.15 g VAZO-52/2 g xylene), and the solution was held at 80°C for 30 minutes. Second chaser solution was then added (0.15 g VAZO-52/2 g xylene), and the solution was held at 80°C for one hour to complete the process. The final solution polymer had total solids of 72.5%, Brookfield viscosity at 25°C of 25,000 cps (25 Nm$^{-2}$S).

EXAMPLE XII    Modification of second alkyd with 1,3-BGDMA

To a 500 ml flask equipped with stirrer, nitrogen inlet pipe, thermometer and condenser were added 40 g of Aroplaz 6440 alkyd polymer (Spencer-Kellog, Division of Textron Inc., 85% T.S.), 51 g of 1,3-BGDMA and 128 g of heptane. After holding at 90°C for 15 minutes, the polymerization was cooled to 80°C. The reaction was chased with 0.51 g VAZO-52/3 g xylene, and held at 80°C for 30 minutes, then cooled to 70°C, chased with 0.51 g VAZO-52/3 g xylene, then held at 70°C for an hour and a half to complete the process.

EXAMPLE XIII    Comparison of particle modified alkyds of invention versus simple MMA and vinyl toluene modified alkyds

As shown by the data in Table 5, the particle-modified alkyds provide a much better balance of properties in pigmented formulations than the simple MMA, vinyl toluene or B-67 blend systems. Much better impact resistance was seen in the particle modified alkyd than the B-67 alkyd blend system.

### Table 5 - Formulations of Pigmented System

| Composition | Zapon Og[3] | Zapon 500g[3] | Thumb Twist[3] | 6 days 140°F Impact (D/R) |
|---|---|---|---|---|
| Aroplaz 6440*[1] | 4 | >8 | >8 | 120/100 |
| 80 Aroplaz 6440/20 B-67*[2] | 3 | 6 | 7 | 20/4 |
| 85 Aroplaz 6440/15 (90 1,3-BGDMA/10 DMAEMA) | 2.5 | 5 | 4.5 | 75/30 |
| 85 Aroplaz 6440/15 (85 1,3-BGDMA/15 DMAEMA) | 2.5 | 5 | 4.5 | 80/70 |
| 85 Aroplaz 6440/15 (90 VT/10 DMAEMA)* | 3.5 | 8 | 8 | 100/100 |
| 85 Aroplaz 6440/15 (90 VT/10 DMAEMA)* | 3.5 | 8 | 8 | 120/100 |

* = Comparative

[1]Aroplaz 6440: medium oil alkyd.

[2]B-67: An amine containing acrylic solution polymer from Rohm and Haas designed as an alkyd modifier.

[3]Values in table are hours to pass.

EXAMPLE XIV    Properties of formulated particle modified alkyds are compared to unmodified and B-67 modified materials in Table 6

Table 6:  Formulated Alkyd Enamels

| Binder | Solids (%) | ICI Visc (Ept) | Zapon Og | Tack 500 | Tukon 3 wks KHN | Impact | |
|---|---|---|---|---|---|---|---|
| | | | | | | Direct | Reverse |
| Cargil 5070* | 63 | 190 | 7 | >8 | 0.89 | >120 | >120 |
| 80(5070)/20(B67)* | 55 | 140 | 2.75 | 6.5 | 1.56 | 50 | 10 |
| Sample 1046 | 63 | 260 | 4 | 6 | 1.56 | >120 | 110 |
| Sample 1049 | 63 | 160 | 4.5 | 8 | 1.39 | >120 | 110 |
| Aroplaz 6440* | 65 | 140 | 4 | >8 | 1.00 | >120 | 120 |
| 80(6440)/20(B67)* | 61 | 230 | 2.25 | 4.5 | 1.21 | 16 | <2 |
| Sample 1055A | 65 | 360 | 2.25 | 4.5 | 2.06 | 50 | 6 |
| Sample 1055B | 65 | 430 | 2.25 | 4.5 | 2.06 | 60 | 8 |

Cargil 5070 a long oil alkyd; Aroplaz 6440 a high MW medium oil alkyd.

B-67 an alkyd modifier from Rohm and Haas

Sample 1046 is 85(5070)//15(90 BGDMA/10 DMAEMA)

Sample 1049 is 90(5070)//10 BGDMA

Sample 1055A is 85(6440)//15(90 BGDMA/10 DMAEMA)

Sample 1055B is 85 (6440)//15(85 BGDMA/15 DMAEMA)

* = Comparative

EXAMPLE XV    1,3-BGDMA Modified Alkyd as the Alkyd Modifier

In this example, the particle modified alkyds were used as the alkyd modifier in place of the B-67. The properties are listed below.

The particle modified alkyd modifier of the invention provides excellent reverse impact resistance with

EP 0 241 132 B1

drying time comparable to the B-67 blend system.

## Table 7

| Binder | Additive | Pass Zapon 500g | Reverse Impact |
|---|---|---|---|
| 100 Aroplaz 6440 | None* | 8 hrs. | 100 |
| 80 Aroplaz 6440 | 20 B-67* | 7.5 hrs. | 4 |
| 80 Aroplaz 6440 | 20 (60 Aroplaz 6440/40 1,3 BGDMA) | 7.5 hrs. | 100 |
| 80 Aroplaz 6440 | 20 (40 Aroplaz 6440/60 1,3 BGDMA) | 7.5 hrs. | 100 |

\* = Comparative

Various modifications, alternatives, and improvements to this invention should become readily apparent from the reading of this specification without departing from the spirit and scope of the invention.

## Claims

1. A method of making a composition, comprising a solution of film-forming solution polymer dissolved in organic solvent and substantially insoluble reinforcing particles dispersed in said solution, said method comprising:

   (1) preparing a solution of film-forming solution polymer in organic solvent, said film-forming solution polymer containing reactive functionality which is either ethylenic unsaturation or is other than ethylenic unsaturation and, when said reactive functionality is other than ethylenic unsaturation, said solution further includes a linking monomer which contains both ethylenic unsaturation and a group reactive with said reactive functionality,

   (2) reacting polyethylenically unsaturated monomer

   (a) when said solution polymer contains reactive functionality which is ethylenic unsaturation, with a portion of said film forming polymer, or

   (b) when said solution polymer contains reactive functionality which is other than ethylenic unsaturation, with a portion of said film forming polymer and said linking monomer,

   so as to form, in-situ, said reinforcing particles.

2. A method as claimed in claim 1 wherein when said reactive functionality is other than ethylenic unsaturation, said reactive functionality is one or more hydroxy, carboxy, anhydro, oxyrane, amino, or isocyanato group.

3. A method as claimed in claim 1 or claim 2, wherein said linking monomer is one or more of allylglycidyl ether, N-methyl-N-(2-hydroxyethyl) linseed oil amide, dimethylaminoethyl methacrylate, and isocyanatoethyl methacrylate, acrylic acid, methacrylic acid, glycidyl acrylate, glycidyl methacrylate, linseed oil fatty acid, linseed oil fatty amine, linseed oil fatty alcohol, drying oil amine, drying oil alcohol, glycidyl drying oil acid esters, N-methyl-N-hydroxyethyl drying oil amides, vinyl benzyl chloride, (meth)acrylol chloride and glycidyl linseed oil fatty ester.

4. A method as claimed in claim 1 wherein said reactive functionality is pendant ethylenic unsaturation.

15

5. A method as claimed in any one of the preceding claims, wherein said organic solvent is xylene, toluene, VM&P naphtha, mixtures of aliphatic/aromatic hydrocarbons, hexanes, heptanes, octanes, ether alcohols, ethyl acetate, butyl acetate, methylethyl ketone, methyl isobutyl ketone, or a mixture thereof.

6. A method as claimed in any one of the preceding claims, wherein said polyethylenically unsaturated monomer is one or more dimethacrylate, diacrylate, trimethacrylate, triacrylate, divinyl aromatic, trivinyl aromatic, diacrylamide, and triacrylamide.

7. A method as claimed in any one of the preceding claims, wherein the monomer system which forms the film-forming solution polymer comprises at least 10 percent by weight polyunsaturated monomer and up to 90 percent by weight monounsaturated monomer.

8. Use of a composition as made by the method claimed in any one of claims 1 to 7 in or as a film, coating, mastic, adhesive or caulk composition.

9. Reinforcing particles obtained by the method claimed in any one of Claims 1 - 7.

10. Use of reinforcing particles as claimed in claim 9 in a composition comprising, in addition to said reinforcing particles, a solution of film-forming solution polymer dissolved in organic solvent, said reinforcing particles being substantially insoluble in said organic solvent.

**Revendications**

1. Méthode de préparation d'une composition, comprenant une solution d'un polymère filmogène en solution dissous dans un solvant organique et des particules renforçantes pratiquement insolubles dispersées dans ladite solution, ladite méthode comprenant:

   (1) la préparation d'une solution de polymère filmogène en solution dans un solvant organique, ledit polymère filmogène en solution contenant une fonctionnalité réactive qui est soit une insaturation éthylénique, soit autre qu'une insaturation éthylénique et, quand ladite fonctionnalité réactive est autre qu'une insaturation éthylénique, ladite solution contient en plus un monomère liant qui contient à la fois une insaturation éthylénique et un groupe réagissant avec ladite fonctionnalité réactive,

   (2) la mise en réaction d'un monomère insaturé de façon polyéthylénique

   (a) quand ledit polymère en solution contient une fonctionnalité réactive qui est une insaturation éthylénique, avec une partie dudit polymère filmogène, ou

   (b) quand ledit polymère en solution contient une fonctionnalité réactive qui est autre qu'une insaturation éthylénique, avec une partie dudit polymère filmogène et ledit monomère liant,

   afin de former, in-situ, lesdites particules renforçantes.

2. Méthode selon la revendication 1 où quand ladite fonctionnalité réactive est autre qu'une insaturation éthylénique, ladite fonctionnalité réactive est un, ou plus, groupement hydroxy, carboxy, anhydro, oxyrane, amino, ou isocyanato.

3. Méthode selon la revendication 1 ou 2 où ledit monomère liant est un, ou plus, éther allylglycidique, amide d'huile de lin N-méthyl-N-2(hydroxyéthylé), méthacrylate de diméthylanimoéthyle, et méthacrylate d'isocyanatoéthyle, acide acrylique, acide méthacrylique, acrylate de glycidyle, méthacrylate de glycidyle, acide gras d'huile de lin, amine grasse d'huile de lin, alcool gras d'huile de lin, amine d'huile siccative, alcool d'huile siccative, esters glycidique d'acides d'huiles siccatives, amides d'huiles siccatives N-méthyl-N-hydroxyéthylés, chlorure de vinylbenzyle, chlorure de méthallyle et ester glycidique d'acide gras d'huile de lin.

4. Méthode selon la revendication 1 où ladite fonctionnalité réactive est une insaturation éthylénique "pendante".

5. Méthode selon l'une quelconque des revendications précédentes, où ledit solvant organique est du xylène, du toluène, du naphta VM&P, des mélanges d'hydrocarbures aliphatiques/aromatiques, des hexanes, des heptanes, des octanes, des éthers-alcools, de l'acétate d'éthyle, de l'acétate de butyle, de la méthyléthylcétone, de la méthylisobutylcétone ou un mélange de ceux-ci.

6. Méthode selon l'une quelconque des revendications précédentes, où ledit monomère insaturé de façon polyéthylénique est un, ou plus, diméthylacrylate, diacrylate, triméthacrylate, triacrylate, divinyl aromatique, trivinyl aromatique, diacrylamide, et triacrylamide.

7. Méthode selon l'une quelconque des revendications précédentes, où le système monomère qui forme le polymère filmogène en solution comprend au moins 10% en poids de monomère poly-insaturé et jusqu'à 90% en poids de monomère mono-insaturé.

8. Utilisation d'une composition comme préparée par la méthode revendiquée dans l'une quelconque des revendications 1 à 7 dans ou comme composition de film, revêtement, mastic, adhésif ou calfatage.

9. Particules renforçantes obtenues par la méthode revendiquée dans l'une quelconque des revendications 1 à 7.

10. Utilisation de particules renforçantes selon la revendication 9 dans une composition comprenant, en plus desdites particules renforçantes, une solution d'un polymère filmogène en solution dissous dans un solvant organique, lesdites particules renforçantes étant pratiquement insolubles dans ledit solvant organique.

## Ansprüche

1. Verfahren zum Herstellen einer Zusammensetzung, enthaltend eine Lösung eines in einem organischen Lösemittel gelösten filmbildenden Lösungspolymers und im wesentlichen unlösliche, in der Lösung dispergierte Verstärkungsteilchen, wobei man
   (1) eine Lösung eines filmbildenden Lösungspolymers in organischem Lösemittel herstellt, wobei das filmbildende Lösungspolymer reaktive Funktionalitäten entweder in Gestalt ethylenischer Ungesättigtheit oder in anderer Gestalt als ethylenischer Ungesättigtheit enthält und, wenn die reaktive Funktionalität keine ethylenische Ungesättigtheit ist, die Lösung weiter ein verknüpfendes Monomer enthält, welches sowohl ethylenische Ungesättigtheit als auch eine Gruppe enthält, die Reaktivität gegenüber der reaktiven Funktionalität hat;
   (2) Polyethylenisch ungesättigtes Monomer umsetzt
      (a) mit einem Teil des filmbildenden Polymers, wenn das Lösungspolymer reaktive Funktionalität in Gestalt ethylenischer Ungesättigtheit enthält oder
      (b) mit einem Teil des filmbildenden Polymers und des verknüpfenden Monomers, wenn das Lösungspolymer reaktive Funktionalität in anderer Gestalt als ethylenischer Ungesättigtheit enthält,
   um in in-situ die Verstärkungsteilchen zu bilden.

2. Verfahren nach Anspruch 1, wobei die reaktive Funktionalität keine ethylenische Ungesättigtheit ist, wobei die reaktive Funktionalität eine oder mehrere Hydroxy-, Carboxy-, Anhydro-, Oxyran-, Amino- oder Isocyanatgruppe ist.

3. Verfahren nach Anspruch 1 oder 2, wobei das verknüpfende Monomer eines oder mehrere ist aus Allylglycidylether, N-Methyl-N-(2-hydroxyethyl)-Leinölamid, Dimethylaminoethylmethacrylat und Isocyanatethylmethacrylat, Acrylsäure, Methacrylsäure, Glycidylacrylat, Glycidylmethacrylat, Leinöl-Fettsäure, Leinöl-Fettamin, Leinöl-Fettalkohol, Trockenöl-Amin, Trockenöl-Alkohol, Glycidyl-Trockenöl-Säureester, N-Methyl-N-hydroxyethyl-Trockenöl-Amide, Vinylbenzylchlorid, (Meth)-Acrylolchlorid und Glycidyl-Leinöl-Fettsäureester.

4. Verfahren nach Anspruch 1, wobei die reaktive Funktionalität anhängende ethylenische Ungesättigtheit ist.

5. Verfahren nach einem beliebigen der vorhergehenden Ansprüche, wobei das organische Lösemittel Xylol, Toluol, VM&P-Naphtha, Gemische von aliphatisch/aromatischen Kohlenwasserstoffen, Hexane, Heptane, Oktane, Etheralkohole, Ethylacetat, Butylacetat, Methylethylketon, Methylisobutylketon oder ein Gemisch davon ist.

6. Verfahren nach einem beliebigen der vorhergehenden Ansprüche, wobei das polyethylenisch ungesättigte Monomer eines oder mehrere ist aus Dimethacrylat, Diacrylat, Trimethacrylat, Triacrylat, Divinylaromaten, Trivinylaromaten, Diacrylamid und Triacrylamid.

7. Verfahren nach einem beliebigen der vorhergehenden Ansprüche, wobei das das filmbildende Lösungspolymer bildende Monomersystem mindestens 10 Gew.-% vielfach ungesättigtes Monomer und bis zu 90 Gew.-% einfach ungesättigtes Monomer enthält.

8. Verwendung einer Zusammensetzung, hergestellt mit dem Verfahren gemäß einem beliebigen der Ansprüche 1 bis 7 in oder als Film, Beschichtung, Mastix, Kleber oder Stemmzusammensetzung.

9. Verstärkungsteilchen, erhalten mit dem Verfahren nach einem beliebigen der Ansprüche 1 bis 7.

10. Verwendung der Verstärkungsteilchen nach Anspruch 9 in einer Zusammensetzung, die zusätzlich zu den Verstärkungsteilchen eine Lösung eines in einem organischen Lösemittel gelösten filmbildenden Lösungspolymers enthält, wobei die Verstärkunsgteilchen in dem organischen Lösemittel im wesentlichen unlöslich sind.